# EUROPEAN PATENT SPECIFICATION

(11) **EP 1 947 236 B1**
(45) Date of publication and mention of the grant of the patent: **17.08.2011**
(21) Application number: 08250247.7
(22) Date of filing: 18.01.2008
(51) Int. Cl.: D21B 1/32, D21F 9/00

(54) **Pulp concentration adjusting method and device for used paper recycling apparatus**
Pulpenkonzentrationseinstellverfahren und Vorrichtung für eine Altpapierrecyclingvorrichtung
Procédé de réglage de concentration de pulpe et dispositif pour appareil de recyclage de papier usagé

(30) Priority: 20.01.2007 JP 2007010905
(43) Date of publication of application: 23.07.2008
(73) Proprietor: Seed Co., Ltd., Osaka-shi Osaka (JP)
(72) Inventor: Tamai, Shigeru, c/o Seed Co., Ltd., Osaka-shi Osaka (JP); Koyama, Yuji, c/o Seed Co., Ltd., Osaka-shi Osaka (JP)
(74) Representative: Mounteney, Simon James

(56) References cited:
- EP-A- 1 862 586
- WO-A-2005/054570

## Description

### BACKGROUND OF THE INVENTION

### Field of the Invention

The invention relates to a pulp concentration adjusting method and device for used paper recycling apparatus (e.g. see document EP-A1-1862586 which is a prior art document falling within the terms of Art. 54(3) EPC), and more particularly to a concentration adjusting technology for adjusting the concentration of used paper pulp manufactured in pulp making process in a preceding process in a used paper recycling apparatus of furniture size installed at the site of origin of used paper, for recycling and processing into reusable paper at the site without discarding the generated used paper.

### Description of the Related Art

Used paper of various types occurs not only in government offices or private companies, but also in daily life or general household. Used paper is usually discarded, incinerated, or disposed as refuse.

On the other hand, in the global concern about effective use of limited resources on earth, various technologies have been developed to regenerate and reuse the used paper being disposed and discarded so far.

Such used paper recycling technologies are mostly installed in paper making industry, and the used paper recycling plant requires, like the ordinary paper making plant, a vast land, an immense investment, and a huge quantity of water and chemicals for the purpose of high speed and mass production and high quality of recycled paper.

For recycling of used paper, a tremendous manual labor is needed for collecting used paper, and used paper collection involves various problems, such as mixing of foreign matter by garbage collectors, defective classification due to lack of knowledge about used paper recycling, and entry of harmful objects, and if used paper is collected, in order to recycle by 100 percent, final checking by specialists and cleaning works are needed. On the other hand, confidential documents are not easily recycled and are mostly incinerated, and the recycling rate is low.

To solve these problems of used paper recycling, an effective method is the technology capable of recycling at the site of origin of used paper, and from such point of view, a new system is proposed, for example, in Japanese Patent Application Laid-Open No. H06-134331.

This apparatus is a wet process shredder for shredding used paper into small pieces while adding a small amount of water, and shredded chips from the shredder are sent outside to a recycling plant, and used as material for recycled paper.

Shredded chips from the shredder are deformed into pulp, and are not in the state of piece of paper, and a high confidentiality is guaranteed, and it is expected to promote recycling of confidential documents.

This wet process shredder is a giant machine installed in a wide space, and it can be used only in a large office, and it is not suited to small office or general household. If shredded chips may be used as material for recycled paper, processing is possible only in large recycling plant, and the recycling cost is high and it is not economical.

### BRIEF SUMMARY OF THE INVENTION

It is a primary object of the invention to present a novel pulp concentration adjusting technology for a used paper recycling apparatus capable of solving such conventional problems.

It is other object of the invention to present a pulp concentration adjusting technology for a used paper recycling apparatus of furniture size to be installed not only in a large office, but also in a small shop or a room in general household, friendly to the environment and low in running cost, capable of preventing leak of confidential information, private information, and other information, and keeping a high confidentiality.

It is another object of the invention to present a used paper recycling apparatus based on such pulp concentration adjusting technology.

To achieve these objects, a first aspect of the invention provides a pulp concentration adjusting method as set out in claim 1

A second aspect of the invention provides a pulp concentration adjusting device as set-out in claim 2. Preferred features of this aspect of the invention are set-out in claims 3 to 8.

A third aspect of the invention provides a used paper re-cycling apparatus as set out in claim 9.

According to the invention, a specified portion is divided from the whole volume of used paper pulp manufactured in the pulp making device in preceding process, and water for adjusting concentration is added to the divided specified portion of used paper pulp, and the total volume of water and specified divided portion of used paper pulp is adjusted to a specified amount, so that a pulp suspension of specified concentration is obtained, that is, the concentration of used paper pulp is adjusted in divided portions or small portions, not in batch, and the water consumption is substantially saved and the device is reduced in size while a high processing capability is maintained.

The used paper recycling apparatus of the invention having such pulp concentration adjusting technology brings about the following outstanding effects, and the used paper recycling apparatus of the invention can be installed not only in a large office, but also in a small shop or ordinary household, and is friendly to the environment and low in running cost, and capable of preventing leak of confidential information, private information, and other information, and keeping a high confidentiality.
(1) The used paper recycling apparatus is realized in a small and simple structure, by including, in an apparatus case of furniture size, a pulp making section for manufacturing used paper pulp by macerating and mashing used paper, and a paper making section for manufacturing recycled paper by making the used paper pulp manufactured in the pulp making section, and therefore without discarding the used paper, the used paper is recycled and reused at the same site of origin, and disposal of used paper is reduced, and refuse problems can be solved, and the limited resources can be utilized effectively.
   Hitherto, because of confidential problems, recycling of used paper has not been promoted, but since the used paper can be recycled and reused at the same site of origin, effects of effective utilization of resources are outstanding.
(2) At the site of origin of used paper, a compact used paper recycling system having a same function as large scale system installed in paper making plant or used paper recycling plant is installed, and used paper can be recycled continuously in a closed circuit in a small shop or general household, and refuse collection and transportation expenses and incineration and other costs are saved, and it is very economical.
(3) The apparatus structure is compact, and it can be installed not only in large office, but also in small shop or general household, and from this point of view, too, leak of confidential information and private information can be securely prevented.
(4) Being installed at the site of origin of used paper, the used paper is macerated into used paper pulp, and the used paper pulp is made into recycled paper, and thus the used paper is circulated and used again as recycled paper at the same site of origin, and information of characters and patterns printed on the paper is not diffused outside of the site of origin of used paper, and leak of confidential information and private information can be prevented securely, and a high confidentiality is a assured, and the limited resources may be used effectively.

That is, by using the used paper recycling apparatus having the paper machine of the invention as paper making section, it is free from risk of external diffusion of information from a specific institute (for example, school, hospital, city office, law firm, patent office, general household).

In other words, in the case of a conventional shredder, if the used paper is shredded into small chips, and the printed characters and patterns are not legible, the shredded chips are incinerated, and external diffusion cannot be prevented perfectly. In this regard, the waste chips may be stored within an internal warehouse, but storing place is needed, and the resources are used only once and are not utilized effectively.

By contrast, according to the used paper recycling apparatus of the invention, the information printed on the used paper is not diffused outside of the closed system, and the resources can be utilized effectively.

These and other features and objects of the invention will be more clearly appreciated and understood from the following detailed description given together with the accompanying drawings and novel facts disclosed in the claims.

### BRIEF DESCRIPTION OF THE DRAWINGS

Fig. 1 is a front view of entire structure of the used paper recycling apparatus in preferred embodiment 1 of the invention, showing a cut-away view of apparatus case.
Fig. 2 is a side view of entire structure of the used paper recycling apparatus, showing a cut-away view of apparatus case.
Fig. 3 is a front sectional view showing essential parts of mashing unit of pulp making section in the used paper recycling apparatus.
Fig. 4 is a schematic block diagram of entire structure of the used paper recycling apparatus.
Fig. 5 is a perspective view of outline of paper making section of the used paper recycling apparatus.
Fig. 6 is a plan view of drive coupling mechanism in the paper making section.
Fig. 7 is a magnified perspective view of pulp feeder in the paper making section.
Fig. 8 is a partially cut-away front view of the pulp feeder.
Fig. 9A is a block diagram of specific mechanism of squeezing and dewatering of dewatering roll section in the paper making section, showing a basic squeezing and dewatering mechanism.
Fig. 9B is a block diagram of specific mechanism of squeezing and dewatering of dewatering roll section in the paper making section, showing a squeezing and dewatering mechanism when the slurry preventive roll is provided near the upstream side of the dewatering roll section.
Fig. 10 is a perspective view of outline structure of the used paper recycling apparatus.
Fig. 11A and Fig. 11B are front sectional views of structure of pulp concentration adjusting section in used paper recycling apparatus in preferred embodiment 2 of the invention.

### DETAILED DESCRIPTION OF THE PREFERRED EMBODIMENTS

Preferred embodiments of the invention are specifically described below while referring to the accompanying drawings. Throughout the drawings, same parts or elements are identified with same reference numerals.

### Preferred Embodiment 1

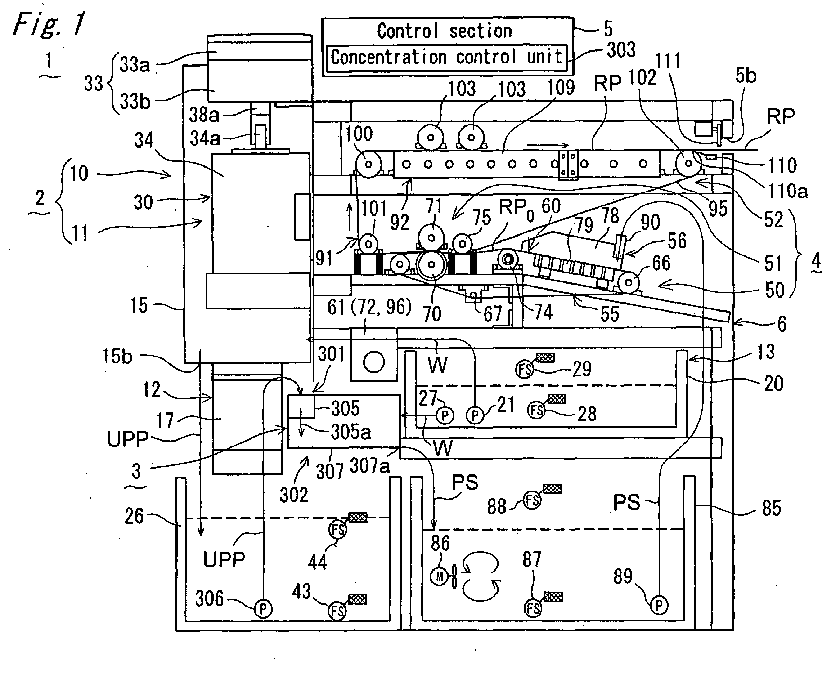

A used paper recycling apparatus of the invention is shown in Fig. 1 to Fig. 10, and this used paper recycling apparatus 1 is specifically installed at the site of origin of used paper, and it is an apparatus for manufacturing recycled paper at the site without disposing or discarding the used paper UP, and such used paper UP includes confidential documents occurring in government offices and private companies, and private letters in general household, and other used and unnecessary documents.

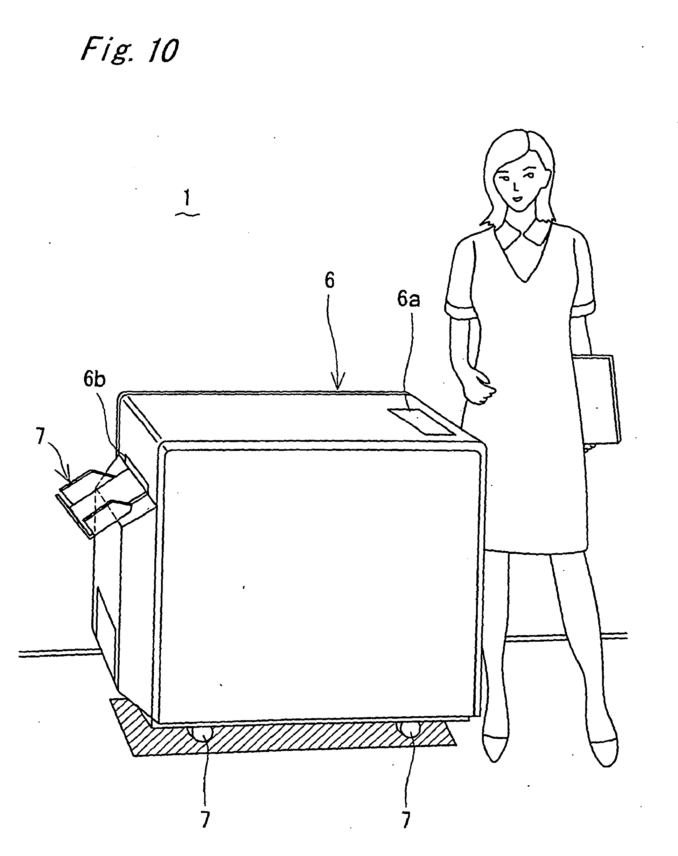

The used paper recycling apparatus 1 has a furniture size as shown in Fig. 10, that is, size and shape similar to office equipment, such as document rack, locker, desk, copier, or personal computer, and is mainly composed of a pulp making section 2, a pulp concentration adjusting section 3, a paper making section 4, and a control section 5 as shown in Fig. 1, and these sections 2 to 5 are contained in an apparatus case 6 in a compact design, and a drive source of the pulp making section 2 and paper making section 4 is a drive source driven by a general household alternating-current power source.

The apparatus case 6 has a furniture size as mentioned above, and the specific dimensions and shape are designed properly depending on the purpose and application. The apparatus case 6 in the illustrated preferred embodiment is a box having dimensions and shape like a copier used in an office, and is provided with casters 7, 7, ..., in its bottom. In the ceiling of the apparatus case 6, an inlet 6a is provided for supplying used paper UP, and a detachable recycled paper receive tray 8 is provided in the side surface for receiving recycled paper RP, RP, .... A discharge port 6b of the apparatus case 6 is provided oppositely to the recycled paper receive tray 8, and recycled paper RP, RP, ... discharged from the discharge port 6b are received sequentially in layers.

The pulp making section (pulp making device) 2 is a process unit for manufacturing used paper pulp by macerating and mashing used paper UP, and is composed of a macerating unit 10 for agitating, grinding, and macerating the used paper UP, and a mashing unit 11 for mashing the used paper UP macerated in the macerating unit 10, and in the illustrated preferred embodiment, the macerating unit 10 and mashing unit 11 circulate the used paper UP for a specified time.

The macerating unit 10 includes an agitating device 12 for agitating the used paper UP, and a water feeder 13 for supplying water into the agitating device 12.

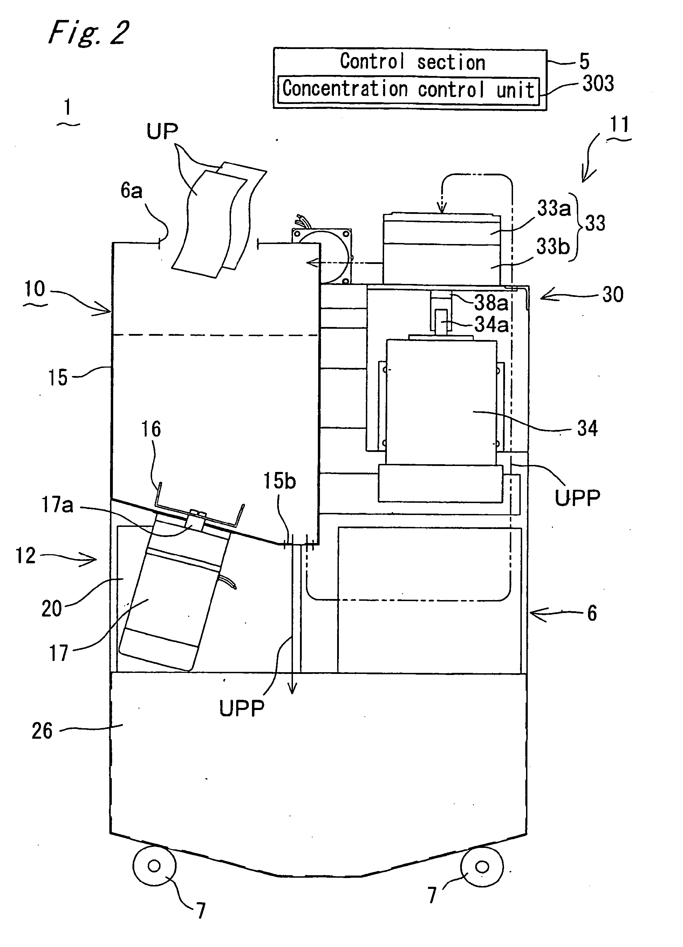

The agitating device 12 includes an agitating tank 15, an agitating impeller 16, and a drive motor 17. The agitating tank 15 is shown in Fig. 2, in which a closable inlet 6a is provided outside of the apparatus case 6 in the ceiling wall, and the agitating impeller 16 is rotatably provided in the inside. The inner volume of the agitating tank 15 is determined depending on the number of sheets of used paper UP to be agitated in batch. In the illustrated preferred embodiment, the agitating tank 15 is supposed to agitate about 25 sheets (about 100 g) of used paper UP of A4 format plain paper copier (PPC) in batch process by adding about 5 liters of water.

The agitating impeller 16 is provided in an inclined bottom of the agitating tank 15, and is driven by and coupled to a rotary shaft 17a of the drive motor 17, and is rotated normally and reversely by the drive motor 17 continuously or intermittently. The drive motor 17 is specifically an electric motor, and the drive motor 17 is electrically connected to the control section 5.

When the agitating impeller 16 is rotated normally and reversely, the used paper UP, if agitated in the size of A4 format, is effectively dispersed by the jet action of water by normal rotation followed by reverse rotation of the agitating impeller 16, and entangling on the agitating impeller 16 can be effectively prevented, so that uniform macerating and mashing of used paper UP, UP,... may be realized.

The water feeder 13 includes white water collect tank 20 and water feed pump 21 as shown in Fig. 1. The white water collect tank 20 is designed, as described below, to collect white water W filtered and dewatered in the paper making section 4 (pulp water of ultralow concentration filtered by the paper making mesh in the paper making process), and the white water W collected in the white water collect tank 20 is supplied as water for agitation into the agitation tank 15 of the agitating device 12 by the water feed pump 21.

The water feeder 13 also functions, as described below, as concentration adjusting water feeder (water feeding means) of pulp concentration adjusting device 3, and for this purpose, moreover, a concentration adjusting water feed pump 27 is provided for supplying the white water W in the white water collect tank 20 into the concentration adjusting tank 307 as water for adjusting the concentration. Reference numerals 28 and 29 are respectively lower limit water level float switch and upper limit water level float switch provided in the white water collect tank 20.

The water source of the water feeder 13 is white water W dewatered in the paper making section 4 collected in the white water collect tank 20, and in other words, all white water W dewatered and collected in the paper making section 4 is circulated and used in the agitating device 12 of the macerating unit 10 and the pulp concentration adjusting section 3 in water circulation system.

In the agitating device 12, the used paper UP, UP, ... supplied into the agitating tank 15 from the opening or inlet 6a of the apparatus case 6 is agitated for a specific time (3 to 5 minutes in the shown case) in water W supplied from the water feeder 13 by normal and reverse rotation of the agitating impeller 16 by the drive motor 17, and macerated and mashed, and transformed into used paper pulp UPP.

The mashing unit 11 has at least one mashing machine, and one mashing machine 30 is shown in the illustrated preferred embodiment.

The mashing machine 30 pressurizes and mashes the used paper UP macerated in the macerating unit 10, and grinds and pulverizes the inks forming characters and patterns on the used paper UP.

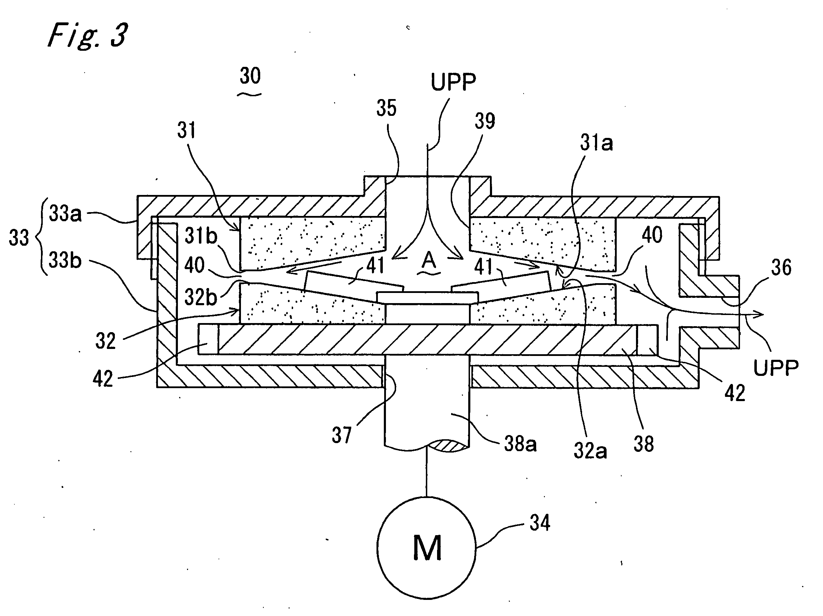

The mashing machine 30 is, as shown in Fig. 3, mainly composed of a plurality of (two in this case) relatively moving mashing members 31, 32 disposed oppositely across a tiny mashing clearance, and specifically includes a mashing tank 33 communicating with the agitating tank 15 of the macerating unit 10, the mashing members 31, 32 provided relatively movably in the mashing tank 33, and a drive source 34 for driving the mashing members 31, 32 relatively.

In the mashing machine 30, not shown, the mashing members 31, 32 are relatively moving disks, and more specifically the upper mashing member 31 is fixed, and the lower mashing member 32 is rotatable.

The mashing tank 33 has an upper and lower divided structure so as to contain the pair of mashing members 31, 32 in a closed cylindrical shape, with the upper tank 33a and lower tank 33b mutually engaged. The mashing tank 33 has a feed port 35 opened in the center of the ceiling of the upper tank 33a, and a discharge port 36 opened in the cylindrical side of the lower tank 33b, and the feed port 35 and discharge port 36 are connected to communicate with the agitating tank 15 of the macerating tank 10 by way of piping not shown. Although not shown specifically, the feed port 35 communicates with the bottom position of the agitating tank 15, and the discharge port 36 communicates with the upper position of the agitating tank 15.

The upper fixed side mashing member 31 is fixed to the ceiling inner side of the upper tank 33a by proper fixing means, and the lower rotatable mashing member 32 is provided oppositely to the fixed side mashing member 31 concentrically across a tiny mashing clearance A.

The rotatable mashing member 32 provided integrally on a rotary bench 38, and a rotary support shaft 38a of the rotary bench 38 is opposite to the outside of the mashing tank 33 by way of the opening 37 in the bottom of the mashing tank 33, that is, in the center of bottom of the mashing tank 33, and is directly fixed to the rotary shaft 34a of the drive motor 34 as the rotary drive source in a direct motor structure. This drive motor 34 is specifically an electric motor, and the drive motor 34 is electrically connected to the control section 5.

The opposite sides 31a, 32a of both mashing members 31, 32 forming the tiny mashing clearance A cooperate and form mashing action surfaces. These opposite mashing action surfaces 31a, 32a are grindstone surfaces having multiple abrasive grains coupled by a binding material, and these two mashing action surfaces 31a, 32a are formed in a taper shape gradually increased in diameter toward the mutually opposite directions as shown in Fig. 3, and the mashing clearance A of conical shape is formed between them.

In the central position of mashing action surface 31a of the fixed side mashing member 31, an inlet 39 is formed to communicate, concentrically with the feed port 35 of the mashing tank 33, and an annular clearance 40 formed between outer peripheral edges 31b, 32b of mashing action surfaces 31a, 32a of the two mashing members 31, 32 is formed as an outlet communicating with the discharge port 36 of the mashing tank 33.

In this relation, a plurality of guide ribs 41, 41, ... are provided in the mashing action surface 32a of the rotary mashing member 32 at equal intervals in the circumferential direction, and a plurality of blades 42, 42, ... are provided on the outer circumference of the rotary bench 38 for supporting the rotary mashing member 32 at equal intervals in the circumferential direction.

By rotation of the rotary mashing member 32, the plurality of guide ribs 41, 41, ... act to guide the used paper pulp UPP flowing into the mashing clearance A from the inlet 39 into the outlet 40, and the plurality of blades 42, 42, ... act as pump for forcing out the used paper pulp UPP flowing in from the outlet 40 toward the discharge port 36 of the mashing tank 33 by centrifugal force.

The gap of the mashing clearance A is set at about 0.05 to 0.8 mm. The gap of the mashing clearance A can be finely adjusted by relatively rotating the upper tank 33a and lower tank 33b of the mashing tank 33, and moving back and forth the engaged portion. As the gap of the mashing clearance A is finely adjusted depending on the purpose, and high pressure and sliding force depending on the strength and driving force of the apparatus mechanical structure can be obtained in the cooperating action of the mashing action surfaces 31a, 32a. Also by adjusting the gap of the mashing clearance A, the mashing speed of the mashing unit 11 (mashing time) can be also adjusted properly.

In the state of the rotary mashing member 32 rotated and driven on the fixed mashing member 31 by the drive motor 34, the used paper pulp UPP supplied into the feed port 35 of the mashing tank 33 from the agitating tank 15 of the macerating unit 10 flows into the mashing clearance A from the inlet 39, passes through the mashing clearance A, receives the pressurizing and mashing action by the mashing action surfaces 31a, 32a rotating relatively while passing through the mashing clearance A, and inks forming characters and patterns on the used paper UP are ground and pulverized, and the paper returns to the agitating tank 15 from the outlet 40 by way of the discharge port 36 of the mashing tank 33 (see the flow path indicated by arrow in Fig. 3).

The feed port 35 and discharge port 36 of the mashing tank 33 are opened and closed by opening means. Specific structure of opening means is not shown, but any conventional manual or automatic opening valve may be used. The opening valve closes the feed port 35 and discharge port 36 when the operation of the mashing unit 11 is stopped, thereby preventing entry of used paper UP or used paper pulp UPP into the mashing tank 33 from the agitating tank 15 of the agitating device 12, and opens the feed port 35 and discharge port 36 when the operation of the mashing unit 11 is started, thereby allowing circulation of used paper UP or used paper pulp UPP between the agitating tank 15 and the mashing tank 33.

In this case, when the macerating unit 10 and mashing unit 11 are driven at the same time, the mashing tank 33 constitutes a pulp swirl tank for allowing circulation of used paper pulp UPP together with the agitating tank 15 of the macerating unit 10, and the used paper pulp UPP flowing and circulating through the circulation tanks 10, 23 receives the agitating and maceration action by the macerating unit 10, and the pressurizing and mashing action and ink grinding and pulverizing action by the mashing unit 11 sequentially and repeatedly. As a result, an appropriate paper strength is obtained for recycled paper RP to be made and regenerated in the paper making section 4 in a later process, and a recycled paper RP of high degree of whiteness is obtained (same effect as in de-inking process).

The used paper pulp UPP finished in macerating and mashing process by the macerating unit 10 and mashing unit 11 drops spontaneously by gravity from the agitating tank 15 and is stored in the pulp storage tank 26 disposed at its lower wide.

In this relation, a drain port 15b is provided in the bottom of the agitating tank 15, and this drain port 15b is opened or closed by a drain valve not shown in the drawing. The drain valve is specifically an electromagnetic opening valve, and is electrically connected to the control section 5.

The inner volume of the pulp storage tank 26 is determined depending on the number of sheets (weight) of used paper UP to be processed in batch in the agitating device 12. In the illustrated preferred embodiment, the pulp storage tank 26 is supposed to have a volume enough to adjust the concentration of used paper pulp UPP corresponding to the capacity of batch processing of about 8 sheets (about 32 g) of used paper UP of A4 format as stated above.

The pulp storage tank 26 is provided with a float switch for lower limit level 43, a float switch for upper limit level 44, and a pulp dividing pump 306 for the pulp concentration adjusting device 3 described below.

The pulp concentration adjusting section (pulp concentration adjusting device) 3 is for adjusting the concentration of the used paper pulp UPP manufactured in the pulp making section 2, and specifically it is disposed at the downstream side of the pulp storage tank 26 for storing the used paper pulp UPP from the agitating tank 15, and is designed to adjust the concentration of used paper pulp UPP stored in the pulp storage tank 26 to an appropriate concentration suited to the subsequent paper making process.

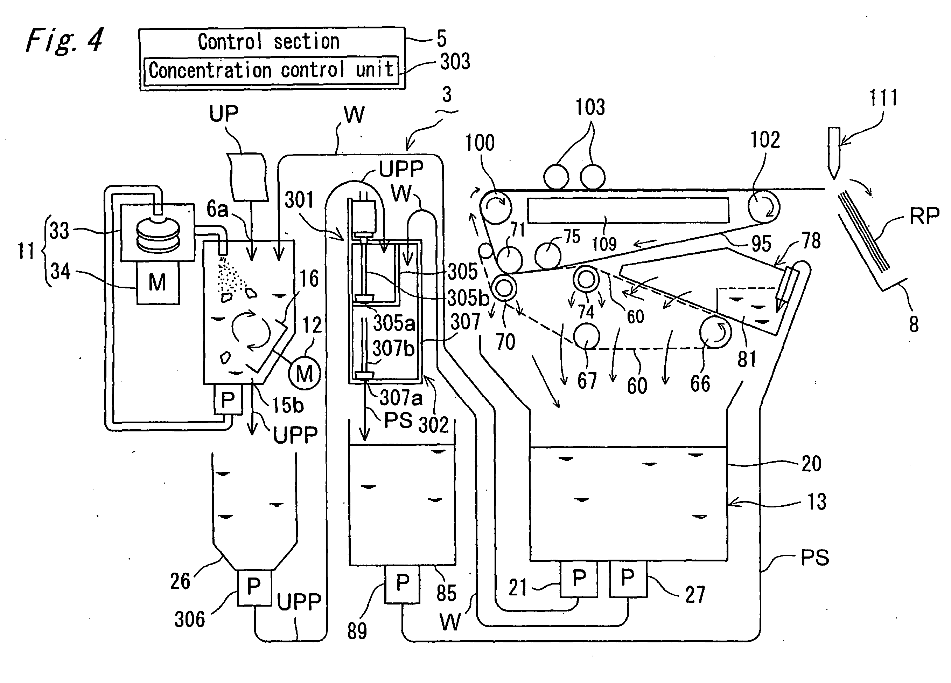

The pulp concentration adjusting section 3 is designed to adjust the concentration of used paper pulp UPP manufactured in the pulp making section 2 by divided portions, and as shown in Fig. 1 and Fig. 4, it mainly includes a used pulp dividing unit (used pulp dividing means) 301, a concentration adjusting unit (concentration adjusting means) 302, and a concentration control unit (control means) 303.

The used pulp dividing unit (used pulp dividing means) 301 divides a specified portion from the whole volume of the used paper pulp UPP manufactured in the pulp making section 2, and includes a pulp dividing tank 305 and a pulp dividing pump 306.

The pulp dividing tank 305 stores the divided portion of used paper pulp UPP manufactured in the pulp making section 2 in preceding process, and specifically a specified portion is divided and supplied in the pulp dividing tank 305 from the whole volume of the used paper pulp UPP stored in the pulp storing tank 26 by the pulp dividing pump 306. This pulp dividing tank 305 is accommodated in the concentration adjusting tank 307 of the concentration adjusting unit 302.

The concentration adjusting unit (concentration adjusting means) 302 is to add water for adjusting concentration to the divided portion of used paper pulp UPP divided by the pulp dividing unit 301, and includes a concentration adjusting tank 307 and a concentration adjusting water feeder (water feeding means) composed of the water feeder 13.

The concentration adjusting tank 307 stores and mixes the specified portion of used paper pulp UPP divided and stored in the pulp dividing tank 305 and water for adjusting concentration, and is built in a double tank structure incorporating the pulp dividing tank 305 of the used paper pulp dividing unit 301 as mentioned above.

Specifically, the pulp dividing tank 305 is disposed at an upper position in the concentration adjusting tank 307, and a drain port 305a is provided in the bottom of the pulp dividing tank 305, so that the used paper pulp UPP may drop spontaneously by gravity from the pulp dividing tank 305 to be supplied in the concentration adjusting tank 307.

The concentration adjusting tank 307 and the pulp dividing tank 305 are built in a double tank structure because the concentration of used paper pulp UPP manufactured in the pulp making section 2 may be adjusted in the pulp concentration adjusting section 3 in divided portion, and also the structure of the concentration adjusting section 3 or the entire structure of the used paper recycling apparatus 1 may be reduced in size.

The inner volume of the pulp dividing tank 305 is determined depending on the specified portion divided from the used paper pulp UPP stored in the pulp storing tank 26 (the divided portion to be adjusted in concentration in small batch), and the inner volume of the concentration adjusting tank 307 is determined depending on the total amount of the volume of the pulp dividing tank 305 and the volume of water W corresponding to the used paper pulp UPP divided and stored in the pulp dividing tank 305.

In the illustrated preferred embodiment, supposing the pulp storing tank 26 has a capacity for storing the corresponding amount of used paper pulp UPP by batch processing of, for example, about 25 sheets (about 100 g) of A4 format used paper UP, the inner volume of the pulp dividing tank 305 is set in a capacity of, for example, about 1500 cc, and the inner volume of the concentration adjusting tank 307 is set in a capacity of, for example, about 3000 cc.

In this relation, a drain port 305a is provided in the bottom of the pulp dividing tank 305, and the drain port 305a is opened and closed by a drain valve 305b shown in Fig. 4. The drain valve 305b is specifically an electromagnetic valve, and is electrically connected to the concentration control unit 303. In the bottom of the concentration adjusting tank 307, a drain port 307a is provided, and the drain port 307a is opened and closed by a drain valve 307b. The drain valves 305b, 307b are specifically an electromagnetic valves, and are electrically connected to the concentration control unit 303.

The concentration adjusting water feeder (water feeding means) 13 is to supply water to the concentration adjusting tank 307, and is used together with the water feeder for supplying water to the agitating device 12 of the macerating unit 10. The concentration adjusting water feeder 13 supplies water W into the concentration adjusting tank 307, as the concentration adjusting water feed pump 27 is driven and controlled by the concentration control unit 303, so as to reach a specified volume including the specified portion of used paper pulp UPP supplied from the pulp dividing tank 305 into the concentration adjusting tank 307.

The concentration control unit (control means) 303 is to control the used paper pulp dividing unit 301 and concentration adjusting unit 302 in interlock, and specifically constitutes a part of the control section 5, and controls the used paper pulp dividing unit 301 and concentration adjusting unit 302 in interlock so as to execute the pulp concentration adjusting process.

First, from the total volume of used paper pulp UPP supplied from the agitating tank 15 and contained in the pulp storing tank 26 (about 100 g of used paper UP + 5000 cc of water W), a specified portion (150 cc) of used paper pulp UPP is divided, and is transferred and stored in the pulp dividing tank 305 of the used paper pulp dividing unit 301 by a pulp dividing pump 306. On the other hand, corresponding to the divided specified amount of the used paper pulp UPP, about 300 cc of water W (precisely, until the total amount with specified portion (150 cc) of used paper pulp UPP is 300 cc) is transferred and stored in the concentration adjusting tank 307 of the concentration adjusting unit 302 from the white water collect tank 20 of the concentration adjusting water feeder 13 by the concentration adjusting water feed pump 27.

In succession, the drain port 305a of the pulp dividing tank 305 is opened by the drain valve 305b, and the whole volume (150 cc) of used paper pulp UPP in the pulp dividing tank 305 spontaneously drops by gravity into the concentration adjusting tank 307, and is mixed with water W in the concentration adjusting tank 307. As a result, a pulp suspension PS of specified concentration (about 0.1% or target concentration) is mixed and prepared in the concentration adjusting tank 307.

In this concentration adjusting process, alternatively, (1) the used paper pulp UPP in the pulp dividing tank 305 is supplied into the concentration adjusting tank 307, and water W is transferred and supplied in the concentration adjusting tank 307 by the concentration adjusting water feed pump 27, and mixed and diluted with the used paper pulp UPP in the concentration adjusting tank 307, and pulp suspension PS of specified concentration (about 0.1% or target concentration) may be prepared, or (2) the used paper pulp UPP in the pulp dividing tank 305 is supplied into the concentration adjusting tank 307, and water W is transferred and supplied in the concentration adjusting tank 307 by the concentration adjusting water feed pump 27 by way of the pulp dividing tank 305, and mixed and diluted with the used paper pulp UPP in the concentration adjusting tank 307, and pulp suspension PS of specified concentration (about 0.1% or target concentration) may be prepared.

The target concentration of the pulp suspension PS to be prepared is determined in consideration of the paper making capacity in the paper making section 4 described below on the basis of the data of preliminary experiments, and it is set at about 0.1% in the illustrated preferred embodiment.

Therefore, the pulp suspension PS prepared at about 0.1% of concentration (target concentration) in the concentration adjusting tank 307 of the pulp concentration adjusting section 3 is released from the drain port 307a in the bottom of the concentration adjusting tank 307 by means of the drain valve 307b, and the whole volume drops spontaneously by gravity into the pulp feed tank 85 of the paper making section 4 in next process, and is stored.

The concentration adjusting interval of adjusting the concentration of used paper pulp UPP in the pulp concentrating section 3 by divided portion is set so that at least the supply capacity of the pulp suspension already adjusted in concentration to the paper making section 4 in later process may be over the paper making capacity in the paper making section 4.

Specifically, the concentration adjusting interval set at a timing to an extent so that the pulp suspension PS in the pulp feed tank 85 may not be lower than a specific value, and if the paper making section 4 is controlled, for example, to process 3 liters of pulp suspension PS in about 1 minute, the concentration adjusting interval by the pulp concentration adjusting section 3 is set within 1 minute.

Thus, the concentration is not adjusted in batch, but in divided portion or small portion by the pulp concentration adjusting section 3, and the consumption of water is substantially saved, and the shape and size of the concentration adjusting tank 307 may be reduced significantly, so that the entire structure of the used paper recycling apparatus 1 may :be realized in a compact design.

The paper making section 4 is a process unit for manufacturing recycled paper RP from the used paper pulp UPP manufactured in the mashing unit 10 (specifically the pulp suspension PS adjusted in concentration by the pulp concentration adjusting section 3), and includes a paper making process unit 50, a dewatering roll unit 51, and a drying process unit 52.

The paper making process unit 50 is a location for manufacturing wet paper from slurry pulp suspension PS of water W and used paper pulp UPP sent from the mashing unit 10 of the pulp making section 2, and includes mainly a paper making conveyor 55, and a pulp feed unit 56.

The paper making conveyor 55 is for conveying the pulp suspension while processing, and specifically a mesh belt 60 of paper making mesh structure formed of numerous mesh cells for filtering and dewatering the pulp suspension PS is disposed to run straightly toward its running direction.

Specifically, the paper making conveyor 55 is composed of the mesh belt 60 of an endless belt form for conveying the pulp suspension while processing, and a drive motor 61 for driving the mesh belt 60.

The mesh belt 60 is specifically an endless belt formed of plate members of paper making mesh structure of specified width connected in a ring form of specified length.

Plate members of paper making mesh structure for composing the mesh belt 60 are made of materials capable of filtering and dewatering the pulp suspension PS properly by numerous mesh cells of the paper making mesh structure, and the illustrated preferred embodiment shows a PET-made mesh belt 60 excellent in heat resistance.

The paper making mesh structure for composing the mesh belt 60 is preferably fine mesh or smooth and fine mesh, and a specific material may be selected depending on the desired characteristic of the paper.

The width size of the mesh belt 60 is specified to a width slightly larger than the width of the recycled paper RP to be manufactured from the pulp suspension PS.

The mesh belt 60 is rotatably suspended and supported, as shown in Fig. 1 and Fig. 4, by way of drive roller 65, follower roller 66, support roller 67, dewatering roll 70, and preliminary dewatering roll 74, and is driven by and coupled to the drive motor 61 through the drive roller 65.

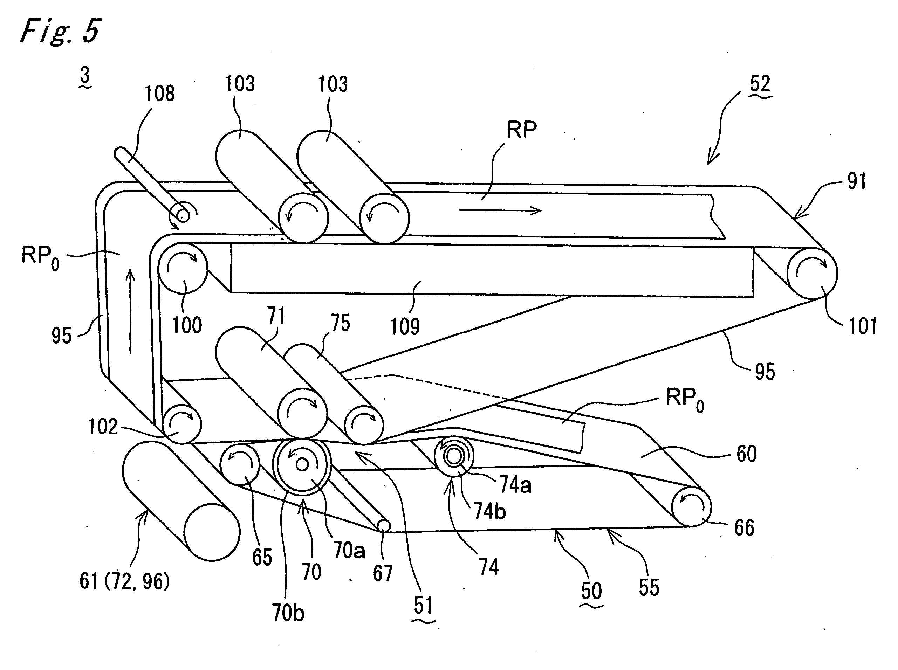

The mesh belt 60 is disposed to run obliquely upward and straightly toward its running direction, and the paper making process length can be considerably extended in a limited space of installation, and the filtering and dewatering efficiency is enhanced in relation to the paper making mesh structure of the mesh belt 60, as shown in Fig. 1 and Fig. 5. The upward inclination angle α of the mesh belt 60 is set depending on the purpose, and is preferably set at 8 degrees to 12 degrees, and is se at 10 degrees in the illustrated preferred embodiment.

The drive motor 61 for driving the mesh belt 60 is specifically an electric motor, and is connected electrically to the control section 5. The drive motor 61 is also used as drive source of dewatering roll unit 51 and drying process unit 52 described below, and the structure for common use or the drive coupling mechanism is mentioned below.

The pulp feed unit 56 is a location for supplying pulp suspension PS from the mashing unit 10 of the pulp making section 2 onto the mesh belt 60, and specifically the pulp feed unit 56 supplies and spreads the pulp suspension PS uniformly on the upper surface of the mesh belt 60. The paper making process unit 50 is provided at the start end of the paper making process of the paper making conveyor 55.

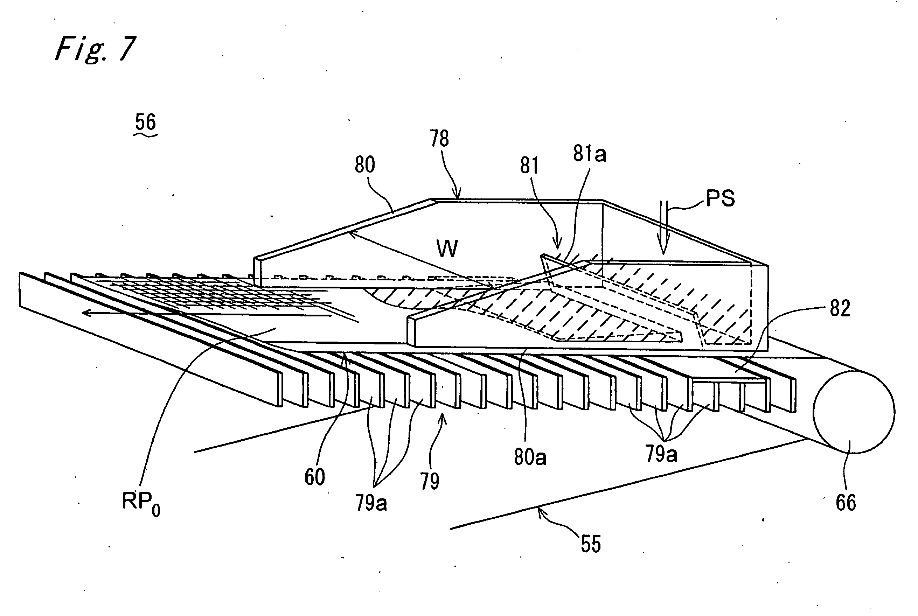

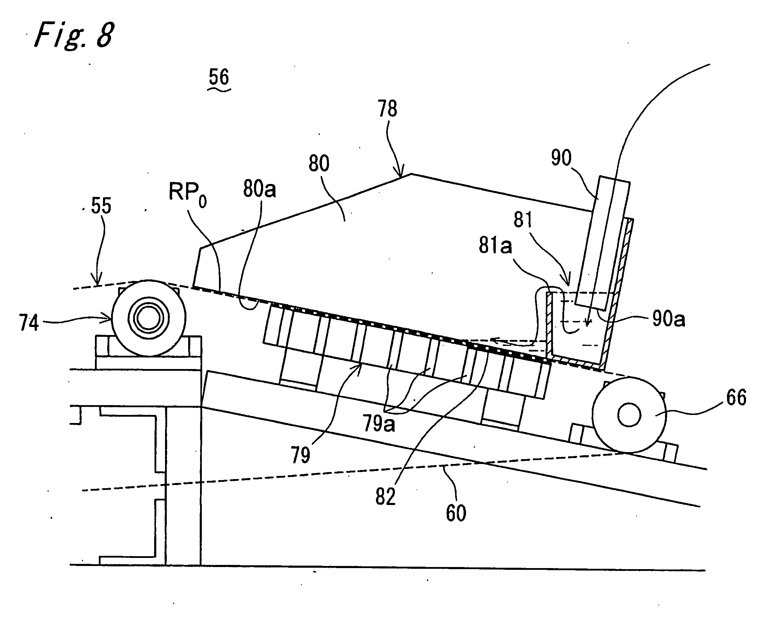

A specific structure of the pulp feed unit 56 is shown in Fig. 7 and Fig. 8. In this pulp feed unit 56, the mesh belt 60 is disposed in an upward slope toward the running direction, and a paper making frame 78 and a partition member 79 are disposed at upper and lower side positions of the mesh belt 60.

The paper making frame 78 is slidably disposed on the upside of the mesh belt 60, and, as shown in Fig. 7 and Fig. 8, includes a main body frame 80 of U shape plane opened at the leading end, that is, the running direction end of the mesh belt 60, and an overflow tank 81 provided at the rear end of the main body frame 80.

The main body frame 80 is disposed so that its lower end 80a may slide on the upside of the mesh belt 60 running obliquely, and the frame inner width W (see Fig. 7) of main body fame 80 is set in a width dimension of recycled paper PR to be manufactured.

The overflow tank 81 is integrally fixed to the rear end of the main body frame 80, and its front wall upper edge 81a is the overflow portion formed horizontally and straightly, and a feed opening 90a of the suspension feed piping 90 for supplying pulp suspension PS of pulp feed tank 85 is provided oppositely in the overflow tank 81.

The pulp suspension PS is supplied and stored in the overflow tank 81 from the suspension feed piping 90, and when the overflow tank 81 is fully filled with pulp suspension PS, and pulp suspension PS is further supplied, it overflows from the overflow unit 81a of the overflow tank 81 as indicated by arrow in Fig. 8a to Fig. 8, and flows down into the flat member 82 of the partition member 79 described below.

The partition member 79 is disposed slidably at the downside of the mesh belt 60, and has a draining louver structure composed of a plurality of framework members 79a, 79a, ... as shown in Fig. 7 and Fig. 8, having a shape and size capable of slidably supporting the entire width of the downside of the mesh belt 60, and the base end position of the louver structure is closed by the flat member 82.

The flat member 82 is provided at a position corresponding to the overflow tank 81 of the paper making frame 78, and is disposed, specifically as shown in Fig. 8, at a position corresponding to the flow-down position of the pulp suspension PS overflowing from the overflow tank 81, and thereby the mesh cells of the flow-down supply position of the pulp suspension PS in the mesh belt 60 are supported in closed state by the flat member 82.

At the upstream side of the pulp feed unit 56, a pulp feed tank 85 is provided for supplying the pulp suspension PS into the pulp feed unit 56.

The pulp suspension PS stored in the pulp feed tank 85 is detected by lower limit water level float switch 87 and upper limit water level float switch 88, and is supplied continuously into the overflow tank 81 of the pulp feed unit 56 by second suspension feed pump 89.

The pulp suspension PS stored in the pulp feed tank 85 is thus supplied into the overflow tank 81 of the pulp feed unit 56 by the second suspension feed pump 89, and the pulp suspension PS supplied in the overflow tank 81 overflows from the overflow tank 81 as shown in Fig. 8, and flows down onto the flat member 82.

The pulp suspension PS is uniformly diffused on the upside of the mesh belt 60 by cooperative stagnant action by the main body frame 80 and partition member 79 of the paper making frame 78, and is conveyed together with the mesh belt 60 while maintaining the dimension specified by the main body frame 80 by the running action of mesh belt 60 in the arrow direction, and is dewatered by the gravitational filtering action of the mesh cells of the mesh belt 60, and wet paper RP₀ is prepared. The filtered and dewatered white water W (pulp water of ultralow concentration filtered by the paper making net in the paper making process) is collected in the white water collect tank 20 of the water feed device 13 as described above.

The dewatering roll unit 51 is a location of squeezing and dewatering the wet paper RP₀ on the mesh belt 60 at the junction of the paper making net process unit 50 mentioned above and a drying process unit 52 described below.

Specifically, the smooth surface belt 95 of the drying process unit 52 at the downstream side described below and the mesh belt 60 of the paper making process unit 50 at the upstream side are disposed in upper and lower layers as shown in Fig. 1 and Fig. 5, and the upper and lower adjacent portions of the smooth surface belt 95 and mesh belt 60 form the junction, and the dewatering roll unit 51 rolls and squeezes the mesh belt 60 and smooth surface belt 95 from upper and lower sides.

The dewatering roll unit 51 mainly includes dewatering roll 70, press roll 71, and drive motor 72, and preliminary dewatering roll 74 and slurry preventive roll 75 are auxiliary components.

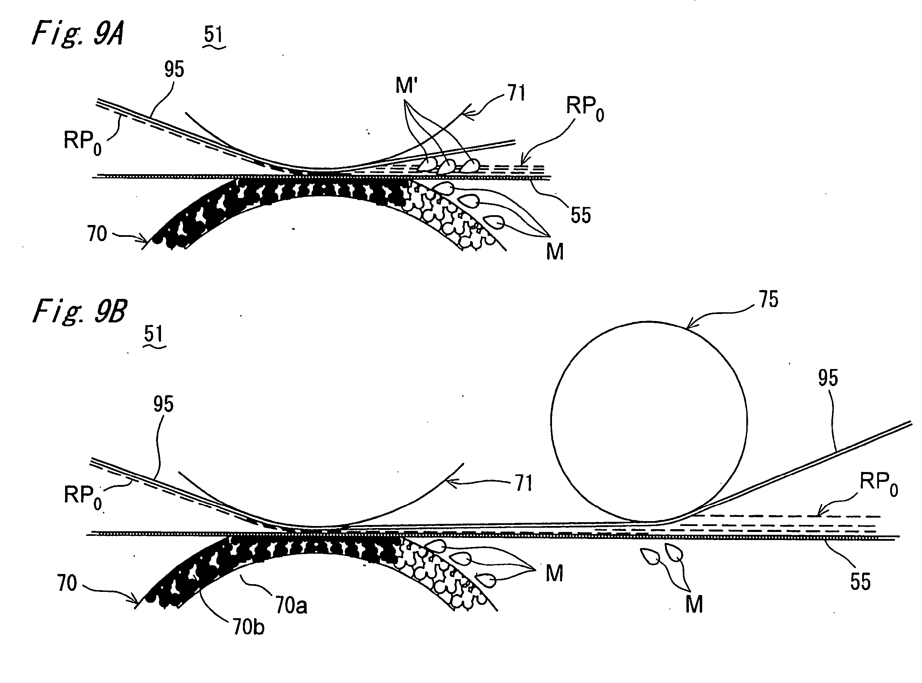

The dewatering roll 70 rolls on the mesh belt 60 from the lower side, and is specifically composed of a cylindrical roll 70a of high rigidity material, and a dewatering layer 70b of porous material of fine continuous pores wound on the outer circumference thereof, as shown in Fig. 9. The dewatering layer 70b is made of material excellent in hydrophilic property, water absorption and water retaining property, and is preferably a porous material of fine continuous pores excellent in flexibility.

The dewatering roll 70 in the illustrated preferred embodiment is a single layer structure, that is, a cylindrical dewatering layer 70b of fine porous continuous foamed material having micron-size ultrafine continuous pores is fitted to the cylindrical outer circumference of the stainless steel cylindrical roll 70a.

The press roll 71 is to roll and press the upside of the smooth surface belt 95 of the drying process unit 52 described below. Specifically, it is a cylindrical roll of high rigidity material. The press roll 71 in the illustrated preferred embodiment is a stainless steel cylindrical roll.

The dewatering roll 70 and press roll 71 are specifically driven by and coupled to a single drive motor 72, and the both rolls 70, 71 are rotated and driven in interlock. In this case, the both rolls 70, 71 are rotated and controlled so that the outer circumferences of the both rolls 70, 71 may mutually roll and contact with a slight difference in rotating speed, on the contact surfaces of the mesh belt 60 and smooth surface belt 95 (the downside of mesh belt 60 and upside of smooth surface belt 95) rolling and squeezing in pressed state between the outer circumferences.

More specifically, the rotating speed of the press roll 71 is set slightly higher than the rotating speed of the dewatering roll 70, and hence the running speed of the smooth surface belt 95 is set higher than the running speed of the mesh belt 60. In such configuration, as mentioned below, when the wet paper RP₀ squeezed and dewatered by the dewatering roll unit 51 is rolled and transferred from the upside of the mesh belt 60 of the lower side to the downside of the smooth surface belt 95 of the upper side, tension is applied to the wet paper RP₀, and creasing of wet paper RP₀ is effectively prevented.

The drive motor 72 is, in the illustrated preferred embodiment, used commonly with the drive motor 61 of the paper making process unit 50 as described below.

By driving of drive motor 72, the both rolls 70, 71 roll and squeeze the both belts 60, 95 from upper and lower side in pressed state, and moisture M contained in the wet paper RP₀ on the mesh belt 60 is absorbed and dewatered by the dewatering roll 70 through the mesh belt 60. The squeezed and dewatered white water W is collected in the white water collect tank 20 of the water feed device 13.

A specific mechanism of squeezing and dewatering is explained by referring to Fig. 9A. By rotation of both rolls 70, 71, the mesh belt 60 and smooth surface belt 95 having the wet paper RP₀ mounted on the upside are guided in between the rolls 70, 71 with the wet paper RP₀ interposed thereon, and rolled and squeezed from upper and lower sides in pressed state. As a result, the moisture M contained in the wet paper RP₀ is squeezed out to the upstream side of the both rolls 70, 71 (the right side in the drawing), but since the smooth surface belt 95 of the upper side has a smooth surface not having pores, and the squeezed moisture M entirely passes through fine continuous pores in the mesh belt 60 at the lower side, and is absorbed in the dewatering layer 70b of the dewatering roll 70.

The preliminary dewatering roll 74 and slurry preventive roll 75 are provided to assist the squeezing and dewatering action of the press roll 71 and dewatering roll 70 in the dewatering roll unit 51.

The preliminary dewatering roll 74 is disposed, as shown in Fig. 1, so as to apply tension to the mesh belt 60 by rolling from the lower side at the upstream side of the dewatering roll unit 51.

The preliminary dewatering roll 74 is similar to the dewatering roll 70 in its specific structure, and is composed of a cylindrical roll 74a of high rigidity material, and a dewatering layer 74b of porous material of fine continuous pores wound on the outer circumference thereof. The preliminary dewatering roll 74 in the illustrated preferred embodiment is a single layer structure, that is, a cylindrical dewatering layer 74b of fine porous continuous foamed material having micron-size ultrafine continuous pores is fitted to the cylindrical outer circumference of the stainless steel cylindrical roll 74a.

The wet paper RP₀ uniformly diffused on the upside of the mesh belt 60 and conveyed together with the mesh belt 60 is filtered and dewatered by the mesh belt 60, and is also absorbed and dewatered by the preliminary dewatering roll 74, and the squeezing and dewatering action of the press roll 71 and dewatering roll 70 is assisted preliminarily.

The slurry preventive roll 75 is disposed, as shown in Fig. 1 and Fig. 9B, so as to press the smooth surface belt 95 to the wet paper RP₀ on the mesh belt 60 at the lower side, by rolling and pressing the smooth surface belt 95 from the upper side, near the upstream side of the dewatering roll unit 51.

Referring now to Fig. 9B, when the mesh belt 60 and smooth surface belt 95 having the wet paper RP₀ mounted on the upside is rolled and squeezed from upper and lower side in pressed state by the dewatering roll 70 and press roll 71, the moisture M contained in the wet paper RP₀ is squeezed out to the upstream side (right side in the drawing) of the both rolls 70, 71, and at the same time the moisture M held as a result of previous squeezing and dewatering of the dewatering roll 70 is also squeezed.

In this case, if the slurry preventive roll 75 is not provided, as shown in Fig. 9A, near the upstream side of the both rolls 70, 71, the intersecting angle of the smooth surface belt 95 at the upper side and the mesh belt 60 at the lower side (the angle enclosed as intersection of pressing points of both rolls 70, 71 by the both belts 60, 95) is relatively large, and hence the smooth surface belt 95 at the upper side is departed from the wet paper RP₀ on the mesh belt 60 at the lower side. Hence, part M' of the total moisture M of the moisture contained in the wet paper RP₀ squeezed to the upstream side of the both rolls 70, 71 and moisture held in the dewatering roll 70 is not absorbed by the dewatering roll 70 through the mesh belt 60, but may be absorbed in the wet paper RP₀, and the wet paper RP₀ may return to the state of slurry.

If the intersecting angle of the smooth surface belt 95 at the upper side and the mesh belt 60 at the lower side is not so large, such problem does not occur, and installation of slurry preventive roll 75 may be omitted.

The wet paper RP₀ squeezed and dewatered by the dewatering roll unit 51 is rolled and transferred on the downside of the smooth surface belt 95 at the upper side from the upside of the mesh belt 60 at the lower side, and is conveyed together with the smooth surface belt 95, and dried in the drying process unit 52.

This transfer action is considered to occur from the smooth surface structure of the smooth surface belt 95. That is, the surface of the mesh belt 60 is a rough surface having numerous continuous fine pores, while the surface of the smooth surface belt 95 at the upper side is a smooth surface not having pores. As a result, the wet paper RP₀ slightly containing moisture is estimated to be attracted by the surface tension on the surface of the smooth surface belt 95.

As mentioned above, the running speed of the smooth surface belt 95 is set higher than the running speed of the mesh belt 60, and when the wet paper RP₀ squeezed and dewatered by the dewatering roll unit 51 is transferred and rolled on the downside of the smooth surface belt 95 at the upper side from the upside of the mesh belt 60 at the lower side, since a tension is applied to the wet paper RP₀ by the difference in speed, the wet paper RP₀ is not creased, but is smoothly transferred onto the smooth surface belt 95.

The drying process unit 52 is a location for obtaining recycled paper RP by drying the wet paper RP₀ squeezed and dewatered by the dewatering roll unit 51 after being processed in the paper making process unit 50, and mainly includes a drying conveyor 91 and a heating and drying unit 92.

The drying conveyor 91 smoothly coveys the wet paper RP₀ squeezed and dewatered in the dewatering roll unit 51, and mainly includes the smooth surface belt 95, and a drive motor 96 for driving this smooth surface belt 95.

The smooth surface belt 95 is for conveying the wet paper RP₀ while heating and drying, and is specifically an endless belt of plate member of smooth surface structure having a specified width formed continuously in a ring in specified length.

The specified width is set slightly larger than the width of the recycled paper RP to be manufactured same as in the mesh belt 60. The plate material of the smooth surface structure can be finished to an appropriate smooth surface on one side of the wet paper RP₀, so as to withstand heating action by the heating and drying unit 97 described below, and is preferably made of elastic heat resistant material, and a fluoroplastic belt is used in the shown preferred embodiment.

The smooth surface belt 95 is rotatably suspended and supported by way of drive roller 100, follower rollers 101, 102, press roll 71, slurry preventive roll 75, smooth surface finishing rolls 103, 103, and preliminary dewatering roll 74 as shown in Fig. 1 and Fig. 5, and is driven by and coupled to the drive motor 96 by way of the drive roller 100.

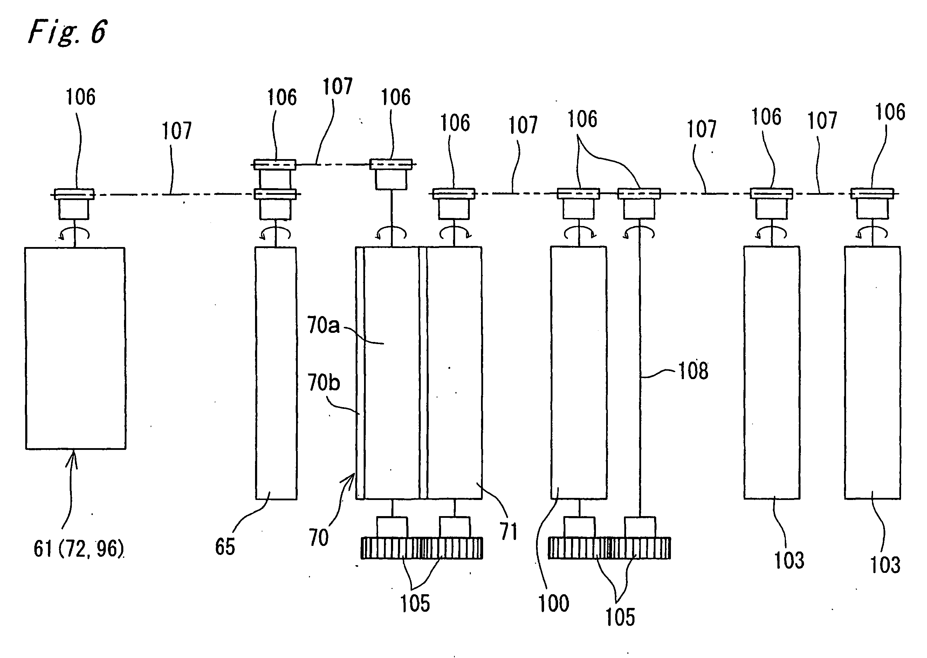

The drive motor 96 for driving the smooth surface belt 95 is commonly used as the driving source of the paper making net conveyor 40 and dewatering roll unit 41 as mentioned above, and this common structure or drive coupling mechanism is shown in Fig. 6.

In Fig. 6, reference numeral 105 is a power transmission gear, numeral 106 is a sprocket, numeral 107 is a power transmission chain applied between the sprockets 106, 106, and numeral 78 is a power transmission shaft.

The gear ratio of power transmission gears 105, 105, ... and sprockets 106, 106, ... is determined so that all of the drive roller 100, follower rollers 101,102, press roll 71, slurry preventive roll 75, smooth surface finishing rolls 103, 103, and preliminary dewatering roll 74 may roll and contact on the smooth surface belt 95 substantially at an identical peripheral speed because the drive source is a single drive motor 96.

The heating and drying unit 92 is a location for heating and drying the wet paper RP₀ on the smooth surface belt 95, and includes a heater plate 109 disposed somewhere in the running route of the smooth belt 95 as a heating unit.

The heater plate 109 in the shown preferred embodiment is provided in the horizontal running portion in the running route of the smooth surface belt 95, and more specifically provided in contact with the opposite side of the upside of the holding side of the wet paper RP₀, that is, on the downside, on the smooth surface belt 95. Hence, the wet paper RP₀ on the smooth surface belt 95 is heated and dried indirectly by the smooth surface belt 95 heated by the heater plate 109.

In the running route of the smooth surface belt 95, the two smooth surface finishing rolls 103, 103 are disposed. Specifically, these smooth surface finishing rolls 103, 103 are disposed parallel opposite to the heater plate 109 in the running portion in the running route of the smooth belt 95.

The both smooth surface finishing rolls 103, 103 sequentially roll and press the wet paper RP₀ on the smooth surface belt 95, and finish the one side and opposite side of the wet paper RP₀ contacting with the surface of the smooth surface belt 95 to a proper smooth surface.

At the downstream side of the heating and drying unit 92 of the smooth surface belt 95, a stripping member 110 is provided. Specifically, the striping member110 is a heat resistant elastic spatula, and the stripping member 110 of the illustrated preferred embodiment is made of an elastically deformable stainless steel plate of about 0.1 to 3 mm in thickness coated with Teflon (registered trademark) on the outer circumference, and its base end is supported at the fixed side (not shown), and its leading end edge 110a elastically abuts and stops on the surface of the smooth surface belt 95.

The paper dried and conveyed on the smooth surface belt 95, that is, the recycled paper RP is sequentially separated from the holding side of the smooth surface belt 95 by the leading end edge 110a of the stripping member 110.

In this relation, at the downstream side of the stripping member 110, that is, at the terminal end position of running route of the smooth surface belt 95 or the terminal end position of the drying process unit 52, a size cutter 111 is provided for cutting the recycled paper RP separated from the smooth surface belt 95 to a specified size and shape (only the length is shown in the drawing). The size cutter 111 is not particularly shown in the drawing, but may be realized by known structure, such as double-side slitter, or guillotine cutter by solenoid.

The recycled paper RP separated form the smooth surface belt 95 is cut to a specified length by the size cutter 111 (vertical size of A4 format in the shown preferred embodiment), and the recycled paper RP of proper size is obtained, and discharged from the discharge port 6b of the apparatus case 6. Cutting in specified length is realized by measuring the belt feed rate of the smooth surface belt 95 by proximity switch, encoder and other sensors.

The control section 5 automatically controls the operation of driving parts of the macerating unit 10 and paper making section 4 by cooperating mutually, and is composed of a microcomputer specifically including CPU, ROM, RAM, and I/O ports.

The control section 5 has a concentration control unit 303 of the pulp concentration adjusting section 3, and stores programs for continuously executing the pulp making process of the pulp making section 2 and the paper making process of the paper making section 4, and also stores preliminarily various data necessary for driving the driving parts, including the driving time of agitating device 12 in the macerating unit 10, operation timing of water feed device 13, running speed of conveyors 40, 42 in the paper making section 4, driving time of heating and drying unit 92, and operation timing of size cutter 111, through keyboard or selective input setting.

Various devices are electrically connected to the control section 5 as mentioned above, such as float switches 28, 29, 43, 87, 88, and drive units 17, 21, 44, 61 (72, 96), 89, 105, 111, and the control section 5 control these drive units 17, 21, 44, 61 (72, 96), 89, 105, 111, according to the measured values and data.

The used paper recycling apparatus 1 having such configuration is started by turning on the power, and the control section 5 automatically controls these drive units in mutual relation, and executes the following processes. Consequently, the used paper UP, UP,... charged in inlet 6a of the apparatus case 6 are macerated and mashed in the pulp making section 2, macerating unit 10 and mashing unit-11, and the used paper pulp UPP is manufactured, and further the used paper pulp UPP is processed in the paper making process unit 50 of the paper making section 4, and processed in the dewatering roll unit 51 an drying process unit 52, and is regenerated as recycled paper RP, and is discharged into the recycled paper tray 8 from the outlet 6b of the apparatus case 6.

In the used paper recycling apparatus 1 having such configuration, the pulp concentration adjusting section 3 divides a specified portion from the whole volume of the used paper pulp UPP manufactured in the pulp making section 2 in preceding process, adds water W for adjusting concentration to the divided portion of used paper pulp UPP, and adjusts the total volume of the divided portion of used paper pulp UP and water W to a specified value, and thereby a pulp suspension of specified concentration is obtained, that is, instead of batch adjustment of concentration of used paper pulp UPP, the concentration is adjusted in divided portion or small portion, and therefore the water consumption is saved and the apparatus size can be reduced while enhancing the processing capacity.

In the used paper recycling apparatus of the invention having such pulp concentration adjusting technology, the following outstanding effects are obtained, and it can be installed not only in a large office, but also in a small shop or a room in general household, is friendly to the environment and low in running cost, capable of preventing leak of confidential information, private information, and other information, and keeping a high confidentiality.
(1) In the apparatus case 6 of furniture size, the used paper recycling apparatus 1 of small and simple structure is realized by including the pulp making section 2 for manufacturing used paper pulp UPP by macerating and mashing used paper UP, the paper making section (paper making device) 3 for manufacturing recycled paper RP by making the used paper pulp UPP manufactured in the pulp making section 2, and therefore without discarding the used paper UP, the used paper UP can be recycled at the site of origin, and disposal of used paper UP is decreased, and not only the refuse problems can be solved, but also the limited resources can be utilized effectively.
   In particular, from confidential problems, recycling of private and confidential used paper UP is not promoted, and by recycling the used paper UP at the site of origin, the resources can be utilized effectively.
(2) At the site of origin of used paper UP, a compact used paper recycling system having a same function as large scale system installed in paper making plant or used paper recycling plant is installed, and used paper UP can be recycled continuously in a closed circuit in a small shop or general household, and refuse collection and transportation expenses and incineration and other costs are saved, and it is very economical.
(3) The apparatus structure is compact, and it can be installed not only in large office, but also in small shop or general household, and from this point of view, too, leak of confidential information and private information can be securely prevented.
(4) Being installed at the site of origin of used paper UP, the pulp making section 2 macerates the used paper UP into used paper pulp UPP, and the paper making section 4 manufactures the used paper pulp UPP into recycled paper RP, and information of characters and patterns printed on the paper is not diffused outside of the site of origin of used paper UP, and leak of confidential information and private information can be prevented securely, and a high confidentiality is held and the resources can be utilized effectively.

That is, by using the used paper recycling apparatus 1 of the preferred embodiment, it is free from risk of external diffusion of various information from the closed system of its use (for example, school, hospital, city office, law firm, patent office, general household).

In other words, in the case of a conventional shredder, if the used paper is shredded into small chips, and the printed characters and patterns are not legible, the shredded chips are incinerated, and external diffusion cannot be prevented perfectly. In this regard, the waste chips may be stored within an internal warehouse, but storing place is needed, and the resources are used only once and are not utilized effectively.

By contrast, according to the used paper recycling apparatus 1 of the preferred embodiment, the information printed on the used paper is not diffused outside of the closed system, and the resources can be utilized effectively.

### Preferred Embodiment 2

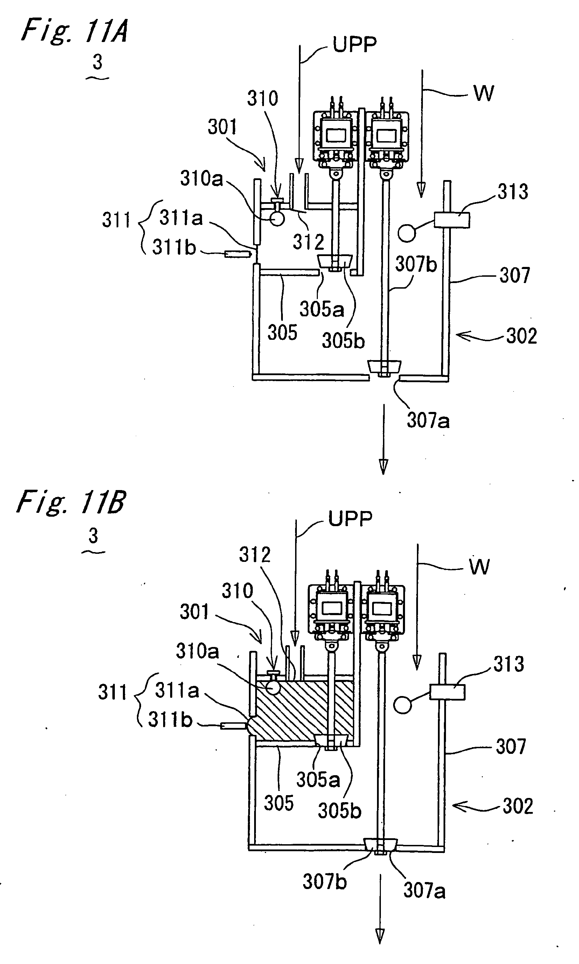

This preferred embodiment is shown in Fig. 11A and Fig. 11B, and is similar to preferred embodiment 1, except that the structure of pulp concentration adjusting section (pulp concentration adjusting device) 3 is slightly modified.

That is, in the pulp concentration adjusting section 3 of the preferred embodiment, the pulp dividing tank 305 for dividing and storing the used paper pulp UPP stored in the pulp storing tank 26 of the pulp making section 2 is a closed tank having an inner volume corresponding to the specified division portion for adjusting the concentration, and includes an air vent valve 310 and internal pressure detector (internal pressure detecting means) 311. Reference numeral 312 is a check valve.

The air vent valve 310 is for exhausting the air in the pulp dividing tank (enclosed tank) 305 when filling up with the used paper pulp UPP, and is specifically a float valve being opened and closed by a float 310a.

The internal pressure detector 311 is for detecting the internal pressure of the pulp dividing tank 305, and specifically includes an elastically deformable internal pressure detecting wall 311a forming a part of the wall of the pulp dividing tank 305 of closed tank, and a stop switch (switching means) 311b for stopping filling and supply of used paper pulp UPP in the pulp dividing tank 305 by detecting expansion of this internal pressure detecting wall 311a.

The internal pressure detecting wall 311a of the preferred embodiment is a rubber plate. The stop switch 311b is preferably made of limit switch or micro switch, and the stop switch 311b is mounted and disposed at expansion position when the internal pressure detecting wall 311a is deformed and expanded elastically to the outer side, and is designed to detect expansion of the internal pressure detecting wall 311a (to act as switching operation).

In the pulp dividing tank 305 thus composed, when the pulp dividing pump 306 supplies the used paper pulp UPP to be stored in the pulp storing tank 26, the air in the pulp dividing tank 30 is discharged from the air vent valve 310 depending on the supply amount, and when the pulp dividing tank 305 is filled with used paper pulp UPP, the float 310a floats up, and the air vent valve 310 is closed.

At the same time, the internal pressure of the pulp dividing tank 305 elevates, and the internal pressure detecting wall 311a deforms (expands) elastically outside. By elastic deformation of the internal pressure detecting tank 311a, the stop switch 311b acts to switch (see Fig. 11B), and the pulp dividing pump 306 stops, and divided supply of used paper pulp UPP from the pulp storing tank 26 into the pulp dividing tank 305 is terminated.

The supply amount of water W for adjusting concentration in the concentration adjusting tank 307, that is, the mixed volume of used paper pulp UPP and water W for adjusting concentration is measured by detecting by the float switch 313 provided in the concentration adjusting tank 307.

Other structure and action are same as in preferred embodiment 1.

As shown in the preferred embodiment, since the valve dividing tank 305 of the valve concentration adjusting section 3 is formed as a closed tank, unlike the open type valve dividing tank opened,to outside, it is effective to prevent troubles, such as leak of used paper pulp UPP to outside, drying of used paper pulp UPP, or clogging of the supply route due to drying of used paper pulp, and the divided portion of the used paper pulp to be adjusted in concentration can be measured accurately.

In addition to the form of closed tank structure of the pulp dividing tank 305, its internal pressure detecting tank 311 has part of the wall of thee pulp dividing wall 305 as a constituent element, and expensive switching device such as diaphragm type switch is not needed, and the apparatus cost can be saved substantially.

In the foregoing preferred embodiments 1 and 2, the following modifications are possible.

For example, in preferred embodiment 2, an elastically deformable internal pressure detecting wall 311a is provided in part of the wall of the pulp dividing tank 305, and the internal pressure detector 311 of the pulp dividing tank 305 is formed, but if part of the wall of the pulp dividing tank 305 is formed of an elastically deformable soft material, the stop switch (switching means) 311b may be provided by corresponding to this portion.

In preferred embodiment 2, the internal pressure detector 311 may be replaced by switching means for detecting the floatation of the float 310a of the air vent valve 310.

## Claims

1. A pulp concentration adjusting method for a pulp making device of a furniture-sized used paper recycling apparatus that is small enough to be installed at the site of origin of used paper, the said method comprising:
dividing a specified portion from the whole of a volume of used paper pulp manufactured in pulp making device in a preceding process;
adding water to the divided portion of used paper pulp in order to adjust its concentration; and
adjusting the total volume of the divided portion of used paper pulp and water to a specified value, thereby preparing a pulp suspension of specified concentration; **characterized in that**
the concentration adjusting interval for adjusting the concentration of used paper pulp manufactured in the pulp making device in divided portions is set so that the supply capacity of adjusted pulp suspension supplied to a paper machine in a later process is at least as large as the paper making capacity of the paper machine.

2. A pulp concentration adjusting device (3) for a fumiture-sized used paper recycling apparatus that is
small enough to be installed at the site of origin of used paper, the said pulp concentration adjusting device (3) being adapted to adjust the concentration of used paper pulp manufactured in a pulp making device and comprising:
used paper pulp dividing means (301) for dividing a specified portion from the whole volume of used paper pulp manufactured in a pulp making device in a preceding process;
concentration adjusting means 302 for adding water for adjusting the concentration of the divided portion of used paper pulp divided by said pulp dividing means (301);
control means (303) for controlling the used paper pulp dividing means (301) and the concentration adjusting means (302) in cooperation;
wherein the control means (303) is adapted to control the used paper pulp dividing means (301) and the concentration adjusting means (302) in cooperation, so as to cause the paper pulp dividing means to divide a specified portion from the whole of a volume of used paper pulp manufactured in a pulp making device (2) in a preceding process; and to cause the concentration adjusting means to add water for adjusting the concentration of the divided portion of used paper pulp, and adjust the total volume of the divided portion of used paper pulp and water to a specified value, thereby preparing a pulp suspension of specified concentration; **characterized in that**
the control means is adapted to set the concentration adjusting interval for adjusting the concentration of used paper pulp manufactured in the pulp making device (2) in divided portions so that the supply capacity of adjusted pulp suspension supplied to a paper machine (4) in a later process is at least as large as the paper making capacity of the paper machine (4). supplied to a paper machine (4) in a later process is at least as large as the paper making capacity of the paper machine (4).

3. A pulp concentration adjusting device according to claim 2, wherein the used paper pulp dividing means (301) has a pulp dividing tank (305) for dividing and containing a specified portion of used paper pulp manufactured in the pulp making device (2) in a preceding process;
the concentration adjusting means (302) includes a concentration adjusting tank (307) for containing a specified portion of used paper pulp divided and contained in the pulp dividing tank (305) and water for adjusting concentration, and water feeding means (13) for supplying water into the concentration adjusting tank (307); and
the water feeding means (13) is adapted to be controlled by the control means (303) to supply water into the concentration adjusting tank (307) so that the sum may be a specified volume including the divided portion of used paper pulp supplied in the concentration adjusting tank (307) from the pulp dividing tank (305).

4. A pulp concentration adjusting device according to claim 3, wherein the pulp dividing tank (305) of the used paper pulp dividing means is built as a double tank structure and is accommodated in the concentration adjusting tank (307) of the concentration adjusting means (302).

5. A pulp concentration adjusting device according to claim 4, wherein the pulp dividing tank (305) is disposed at an upper position in the concentration adjusting tank (307), and is adapted to allow the used paper pulp to drop spontaneously by gravity from the pulp dividing tank (305) to be supplied to the concentration adjusting tank (307).

6. A pulp concentration adjusting device according to any one of claims 3 to 5, wherein the pulp dividing tank (305) is a closed tank having an inner volume corresponding to the specified divided portion of the used paper pulp to be divided and stored;
the enclosed tank is provided with an air vent valve (310) for exhausting air in the closed tank when filled with the used paper pulp, and internal pressure detecting means (311) for detecting the internal pressure of the closed tank; and
the interval pressure detecting means (311) is adapted to detect elevation of internal pressure when the closed tank is filled with used paper pulp, and stop supply of used paper pulp to the closed tank.

7. A pulp concentration adjusting device according to claim 6, wherein the internal pressure detecting means (311) has an elastically deformable internal pressure detecting wall forming a part of the wall of the closed tank, and switching means for detecting expansion of the internal pressure detecting wall and stopping supply of used paper pulp to the closed tank.

8. A pulp concentration adjusting device according to claim 6, wherein the internal pressure detecting means has a float (310a) in the air vent valve (310), and switching means for detecting floatation of the float and stopping supply of used paper pulp to the closed tank.

9. A used paper recycling apparatus comprising, in an apparatus case of furniture size:
a pulp making section, for manufacturing used paper pulp by macerating and mashing used paper;
a pulp concentration adjusting section, for adjusting the concentration of used paper pulp manufactured in the pulp making section;
a paper making section for manufacturing recycled paper from used paper pulp adjusted in concentration in the pulp concentration adjusting section; and
a control section for driving and controlling the pulp making section and paper making section in cooperation,
wherein the pulp concentration adjusting section is a pulp concentrating adjusting device as set out in one of claims 2 to 8.

## Patentansprüche

1. Pulpenkonzentrationseinstellverfahren für eine Pulpenherstellungsvorrichtung einer Altpapierrecyclingvorrichtung in Möbelgröße, die klein genug ist, dass sie am Entstehungsort des Altpapiers installiert werden kann, wobei das Verfahren die folgenden Schritte aufweist:
Abtrennen einer vorgeschriebenen Menge vom Gesamtvolumen der Altpapierpulpe, die in der Pulpenherstellungsvorrichtung bei einem vorhergehenden Prozess hergestellt wird;
Hinzufügen von Wasser zur abgetrennten Menge der Altpapierpulpe, um ihre Konzentration einzustellen; und
Einstellen des Gesamtvolumens der abgetrennten Menge der Altpapierpulpe und des Wassers auf einen vorgeschriebenen Wert, wodurch eine Pulpesuspension mit einer vorgeschriebenen Konzentration hergestellt wird;
**dadurch gekennzeichnet, dass**
der Konzentrationseinstellintervall für das Einstellen der Konzentration der in der Pulpenherstellungsvorrichtung hergestellten Altpapierpulpe in abgetrennten Mengen so eingestellt wird, dass die Zuführungsleistung der eingestellten Pulpesuspension, die einer Papiermaschine bei einem späteren Prozess zugeführt wird, mindestens so groß ist wie die Papierherstellungsleistung der Papiermaschine.

2. Pulpenkonzentrationseinstellvorrichtung (3) für eine Altpapierrecyclingvorrichtung in Möbelgröße, die klein genug ist, dass sie am Entstehungsort des Altpapiers installiert werden kann, wobei die Pulpenkonzentrationseinstellvorrichtung (3) so ausgebildet ist, dass die Konzentration der in einer Pulpenherstellungsvorrichtung hergestellten Altpapierpulpe eingestellt wird, und die aufweist:
ein Altpapierpulpenabtrennmittel (301) für das Abtrennen einer vorgeschriebenen Menge vom Gesamtvolumen der in einer Pulpenherstellungsvorrichtung bei einem vorhergehenden Prozess hergestellten Altpapierpulpe;
ein Konzentrationseinstellmittel (302) für das Hinzufügen von Wasser für das Einstellen der Konzentration der abgetrennten Menge der Altpapierpulpe, die von dem Pulpenabtrennmittel (301) abgetrennt wurde;
ein Steuermittel (303) für das Steuern des Altpapierpulpenabtrennmittels (301) und des Konzentrationseinstellmittels (302) in Kooperation;
wobei das Steuermittel (303) ausgebildet ist, um das Altpapierpulpenabtrennmittel (301) und das Konzentrationseinstellmittel (302) in Kooperation zu steuern, um so zu veranlassen, dass das Papierpulpenabtrennmittel eine vorgeschriebene Menge vom Gesamtvolumen der in einer Pulpenherstellungsvorrichtung (2) bei einem vorhergehenden Prozess hergestellten Altpapierpulpe abtrennt, und um zu veranlassen, dass das Konzentrationseinstellmittel Wasser für das Einstellen der Konzentration der abgetrennten Menge der Altpapierpulpe hinzufügt und das Gesamtvolumen der abgetrennten Menge der Altpapierpulpe und des Wassers auf einen vorgeschriebenen Wert einstellt, wodurch eine Pulpesuspension mit einer vorgeschriebenen Konzentration hergestellt wird;
**dadurch gekennzeichnet, dass**
das Steuermittel ausgebildet ist, um den Konzentrationseinstellintervall für das Einstellen der Konzentration der in der Pulpenherstellungsvorrichtung (2) hergestellten Altpapierpulpe in abgetrennten Mengen so einzustellen, dass die Zuführungsleistung der eingestellten Pulpesuspension, die einer Papiermaschine (4) bei einem späteren Prozess zugeführt wird, mindestens so groß ist wie die Papierherstellungskapazität der Papiermaschine (4).

3. Pulpenkonzentrationseinstellvorrichtung nach Anspruch 2, bei der das Altpapierpulpenabtrennmittel (301) einen Pulpenabtrennbehälter (305) für das Abtrennen und Aufnehmen einer vorgeschriebenen Menge der in der Pulpenherstellungsvorrichtung (2) bei einem vorhergehenden Prozess hergestellten Altpapierpulpe aufweist;
das Konzentrationseinstellmittel (302) einen Konzentrationseinstellbehälter (307) für das Aufnehmen einer vorgeschriebenen Menge der Altpapierpulpe, die in den Pulpenabtrennbehälter (305) abgetrennt und darin aufgenommen wurde, und des Wassers für das Einstellen der Konzentration und ein Wasserzuführmittel (13) für das Zuführen von Wasser in den Konzentrationseinstellbehälter (307) umfasst; und
das Wasserzuführmittel (13) so ausgebildet ist, dass sie durch das Steuermittel (303) gesteuert wird, um Wasser in den Konzentrationseinstellbehälter (307) so zuzuführen, dass die Summe ein vorgeschriebenes Volumen sein kann, das die abgetrennte Menge der Altpapierpulpe umfasst, die vom Pulpenabtrennbehälter (305) in den Konzentrationseinstellbehälter (307) zugeführt wird.

4. Pulpenkonzentrationseinstellvorrichtung nach Anspruch 3, bei der der Pulpenabtrennbehälter (305) des Altpapierpulpenabtrennmittels als eine Doppelbehälterkonstruktion gebaut ist und im Konzentrationseinstellbehälter (307) des Konzentrationseinstellmittels (302) aufgenommen wird.

5. Pulpenkonzentrationseinstellvorrichtung nach Anspruch 4, bei der der Pulpenabtrennbehälter (305) in einer oberen Position im Konzentrationseinstellbehälter (307) angeordnet und so ausgebildet ist, dass gestattet wird, dass die Altpapierpulpe spontan infolge der Schwerkraft aus dem Pulpenabtrennbehälter (305) fällt, damit sie dem Konzentrationseinstellbehälter (307) zugeführt wird.

6. Pulpenkonzentrationseinstellvorrichtung nach einem der Ansprüche 3 bis 5, bei der der Pulpenabtrennbehälter (305) ein geschlossener Behälter mit einem Innenvolumen ist, das der vorgeschriebenen abgetrennten Menge der Altpapierpulpe entspricht, die abgetrennt und gelagert wird;
der geschlossene Behälter mit einem Entlüftungsventil (310) für das Entleeren von Luft im geschlossenen Behälter, wenn er mit der Altpapierpulpe gefüllt ist, und einem Innendrucknachweismittel (311) für das Nachweisen des Innendruckes des geschlossenen Behälters versehen ist; und
das Innendrucknachweismittel (311) ausgebildet ist, um eine Erhöhung des Innendruckes nachzuweisen, wenn der geschlossene Behälter mit der Altpapierpulpe gefüllt ist, und um die Zuführung von Altpapierpulpe zum geschlossenen Behälter zu unterbrechen.

7. Pulpenkonzentrationseinstellvorrichtung nach Anspruch 6, bei der das Innendrucknachweismittel (311) eine elastisch verformbare Innendrucknachweiswand, die einen Teil der Wand des geschlossenen Behälters bildet, und ein Schaltmittel für das Nachweisen der Expansion der Innendrucknachweiswand und das Unterbrechen der Zuführung von Altpapierpulpe zum geschlossenen Behälter aufweist.

8. Pulpenkonzentrationseinstellvorrichtung nach Anspruch 6, bei der das Innendrucknachweismittel einen Schwimmer (310a) im Entlüftungsventil (310) und ein Schaltmittel für das Nachweisen des Schwimmens des Schwimmers und das Unterbrechen der Zuführung von Altpapierpulpe zum geschlossenen Tank aufweist.

9. Altpapierrecyclingvorrichtung, die in einem Vorrichtungsgehäuse in Möbelgröße aufweist:
einen Pulpenherstellungsabschnitt für die Herstellung von Altpapierpulpe durch Mazerieren und Zerstampfen von Altpapier;
einen Pulpenkonzentrationseinstellabschnitt für das Einstellen der Konzentration der im Pulpenherstellungsabschnitt hergestellten Altpapierpulpe;
einen Papierherstellungsabschnitt für die Herstellung von Recyclingpapier aus Altpapierpulpe, die hinsichtlich der Konzentration im Pulpenkonzentrationseinstellabschnitt eingestellt wurde; und
einen Steuerabschnitt für das Antreiben und Steuern des Pulpenherstellungsabschnittes und des Papierherstellungsabschnittes in Kooperation,
wobei der Pulpenkonzentrationseinstellabschnitt eine Pulpenkonzentrationseinstellvorrichtung nach einem der Ansprüche 2 bis 8 ist.

## Revendications

1. Procédé d'ajustement de la concentration d'un dispositif de production de pâte à papier d'un appareil de recyclage de papier usagé de la taille d'un meuble, ayant une taille suffisamment petite pour permettre son installation sur le site d'origine de papier usagé, ledit procédé comprenant les étapes ci-dessous :
division d'une partie spécifiée de l'ensemble d'un volume de pâte à papier usagé produite dans le dispositif de production de pâte à papier au cours d'un processus précédent ;
addition d'eau à la partie divisée de pâte à papier usagé en vue d'ajuster la concentration ; et
ajustement du volume total de la partie divisée de pâte à papier usagé et d'eau à une valeur spécifiée, pour préparer ainsi la suspension de pâle à papier à concentration spécifiée ;
**caractérisé en ce que**
l'intervalle d'ajustement de la concentration pour ajuster la concentration de pâte à papier usagé produite dans le dispositif de production de pâte à papier en parties divisées est ajusté de sorte que la capacité d'alimentation de la suspension de pâte à papier ajustée amenée vers une machine à papier au cours d'un processus ultérieur est au moins aussi grande que la capacité de production de papier sur la machine à papier.

2. Dispositif d'ajustement de la concentration de pâte à papier (3) pour un appareil de recyclage de papier usagé de la taille d'un meuble, ayant une taille suffisamment petite pour permettre son installation sur le site d'origine du papier usagé, ledit dispositif d'ajustement de la concentration de la pâte à papier (3) étant adapté pour ajuster la concentration de la pâte à papier usagé dans un dispositif de production de pâte à papier, et comprenant :
un moyen de division de la pâte à papier usagé (301), pour diviser une partie spécifique de l'ensemble du volume de pâte à papier usagé produite dans un dispositif de production de pâte à papier au cours d'un processus précédent ;
un moyen d'ajustement de la concentration (302), pour ajouter de l'eau en vue de l'ajustement de la concentration de la partie divisée de pâte à papier usagé divisée par ledit moyen de division de la pâte à papier (301) ;
un moyen de commande (303), pour contrôler le moyen de division de la pâte à papier usagé (301) et le moyen d'ajustement de la concentration (302) en coopération ;
le moyen de commande (303) étant adapté pour contrôler le moyen de division de la pâte à papier usagé (301) et le moyen d'ajustement de la concentration (302) en coopération, de sorte à entraîner le moyen de division de la pâte à papier à diviser une partie spécifiée de l'ensemble du volume de pâte à papier usagé produite dans le dispositif de production de pâte à papier (2) au cours d'un processus précédent ; et à entraîner le moyen d'ajustement de la concentration à ajouter de l'eau en vue de l'ajustement de la concentration de la partie divisée de pâte à papier usagé, et à ajuster le volume global de la partie divisée de pâte à papier usagé et d'eau à une valeur spécifiée, afin de préparer ainsi une suspension de pâte à papier ayant une concentration spécifiée ;
**caractérisé en ce que**
le moyen de commande est adapté pour ajuster l'intervalle d'ajustement de la concentration pour ajuster la concentration de pâte à papier usagé produite dans le dispositif de production de pâte à papier (2) en parties divisées, de sorte que la capacité d'alimentation de suspension de pâte à papier ajustée amenée vers une machine à papier (4) au cours d'un processus ultérieur est au moins aussi grande que la capacité de production de papier de la machine à papier (4).

3. Dispositif d'ajustement de la concentration de pâte à papier selon la revendication 2, dans lequel le moyen de division de la pâte à papier usagé (301) comporte un réservoir de division de la pâte à papier (305), pour diviser et contenir une partie spécifiée de pâte à papier usagé produite dans le dispositif de production de pâte à papier (2) au cours d'un processus précédent ;
le moyen d'ajustement de la concentration (302) englobant un réservoir d'ajustement de la concentration (307), destiné à contenir une partie spécifiée de la pâte à papier usagé divisée et contenue dans le réservoir de division de la pâte à papier (305) et de l'eau en vue de l'ajustement de la concentration, et un moyen d'alimentation d'eau (13) pour assurer l'alimentation d'eau dans le réservoir d'ajustement de la concentration (307) ; et
le moyen d'alimentation d'eau (13) étant adapté pour être contrôlé par le moyen de commande (303), pour amener l'eau dans le réservoir d'ajustement de la concentration (307), de sorte que la somme peut être un volume spécifié englobant la partie divisée de pâte à papier usagé amenée dans le réservoir d'ajustement de la concentration (307) à partir du réservoir de division de la pâte à papier (305).

4. Dispositif d'ajustement de la concentration de pâte à papier selon la revendication 3, dans lequel le réservoir de division de la pâte à papier (305) du moyen de division de la pâte à papier usagé est construit sous forme d'une structure à réservoir double et est reçu dans un réservoir d'ajustement de la concentration (307) du moyen d'ajustement de la concentration (302).

5. Dispositif d'ajustement de la concentration de pâte à papier selon la revendication 4, dans lequel le réservoir de division (305) est agencé au niveau d'une position supérieure dans le réservoir d'ajustement de la concentration (307) et est adapté pour permettre la retombée spontanée par gravité de la pâte à papier usagé à partir du réservoir de division de la pâte à papier (305) en vue de son amenée vers le réservoir d'ajustement de la concentration (307).

6. Dispositif d'ajustement de la concentration de pâte à papier selon l'une quelconque des revendications 3 à 5, dans lequel le réservoir de division de la pâte à papier (305) est un réservoir fermé, ayant un volume interne correspondant à la partie divisée spécifiée de la pâte à papier usagé devant être divisée et stockée ;
le réservoir renfermé comportant une soupape de purge d'air (310), pour assurer l'échappement de l'air contenu dans le réservoir fermé lorsqu'il est rempli de pâte à papier usagé, et un moyen de détection de la pression interne (311), pour détecter la pression interne du réservoir fermé ; et
le moyen de détection de la pression interne (311) étant adapté pour détecter un accroissement de la pression interne lorsque le réservoir fermé est rempli de pâte à papier usagé, et pour arrêter l'alimentation de pâte à papier usagé vers le réservoir fermé.

7. Dispositif d'ajustement de la concentration de pâte à papier selon la revendication 6, dans lequel le moyen de détection de la pression interne (311) comporte une paroi de détection de la pression interne à déformation élastique, constituant une partie de la paroi du réservoir fermé, et un moyen de commutation pour détecter une expansion de la paroi de détection de la pression interne et arrêter l'alimentation de pâte à papier usagé vers le réservoir fermé.

8. Dispositif d'ajustement de la concentration de pâte à papier selon la revendication 6, dans lequel le moyen de détection de la pression interne comporte un flotteur (310a) dans la soupape de purge d'air (310), et un moyen de commutation pour détecter le flottement du flotteur et arrêter l'alimentation de pâte à papier usagé vers le réservoir fermé.

9. Appareil de recyclage de papier usagé comprenant, dans un boîtier d'appareil de la taille d'un meuble :
une section de production de pâte à papier, pour produire de la pâte à papier usagé par macération et brassage de papier usagé ;
une section d'ajustement de la concentration de la pâte à papier, pour ajuster la concentration de la pâte à papier usagé produite dans la section de production de pâte à papier ;
une section de production de papier, pour produire du papier recyclé à partir de pâte à papier usagé dont la concentration a été ajustée dans la section d'ajustement de la concentration de la pâte à papier ; et
une section de commande, pour entraîner et contrôler la section de production de pâte à papier et la section de production de papier en coopération ;
la section d'ajustement de la concentration de la pâte à papier étant un dispositif d'ajustement de la concentration de la pâte à papier selon l'une quelconque des revendications 2 à 8.
